# EUROPEAN PATENT APPLICATION

(11) **EP 4 613 445 A1**
(43) Date of publication of application: **10.09.2025**
(21) Application number: 22964527.0
(22) Date of filing: 01.11.2022
(51) Int. Cl.: B25J 15/04, B25J 9/08

(54) **ROBOT PROCESS TOOL EXCHANGE DEVICE**

(71) Applicant: UND Co., Ltd., Gumi-si, Gyeongsangbuk-do 39253 (KR)
(72) Inventor: LEE, Cheol Su, Daegu 42190 (KR)
(74) Representative: Valet Patent Services Limited
(86) International application number: PCT/KR2022/016879
(87) International publication number: WO 2024/096148

(57) **Abstract**

The present invention provides a robot process tool exchange device, comprising: a first coupling module configured to be mounted on a robot; and a second coupling module configured to be mounted on a process tool, wherein one of the first coupling module and the second coupling module comprises a switching magnetic unit configured to generate a magnetic path to cause the one to be magnetically coupled to the other of the first coupling module and the second coupling module, or to release the magnetic path to cause the one to be separated from the other, and the other of the first coupling module and the second coupling module comprises a clamping unit configured to clamp the one by being transformed in posture by means of magnetic force as the switching magnetic unit generates the magnetic path.

## Description

### TECHNICAL FIELD

The present invention relates to a device for exchanging and installing various process tools on a robot.

### BACKGROUND ART

Generally, industrial robots (or robots) are used in industrial assembly lines to accurately perform repetitive tasks without human assistance. For example, in the automotive industry, robots perform various tasks such as material handling, cutting, welding, and sensing.

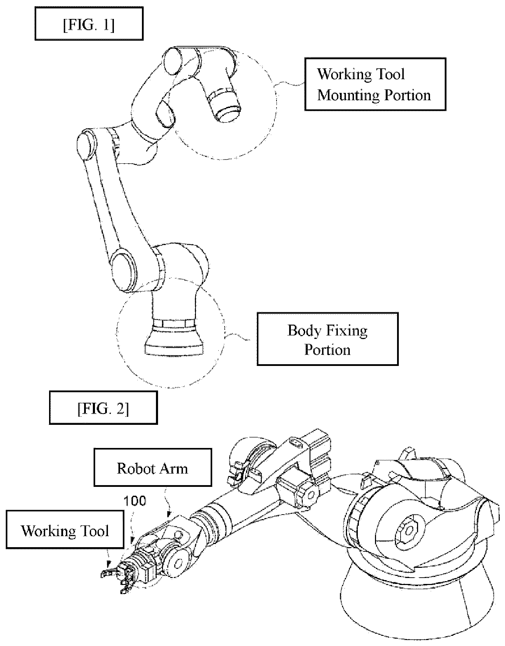

Articulated robots are commonly used for such tasks. FIG. 1 is a perspective view showing a general articulated robot.

An articulated robot may include a process tool mounting portion at its upper end for mounting a process tool (working tool). A body fixing portion for securing the robot to the floor may be provided at the lower end of the robot. The process tool can be exchanged depending on the task or purpose, allowing a single robot to perform various operations.

To prevent the process tool from detaching, the robot includes a locking device (or a robot process tool exchange device) for locking the process tool to the process tool mounting portion.

Conventional robot process tool exchange devices are driven by pneumatic or hydraulic pressure to couple or separate the process tool from the process tool mounting portion. Consequently, auxiliary equipment (e.g., compressors, pneumatic or hydraulic hoses) is required to supply the pneumatic or hydraulic pressure to operate the conventional robot process tool exchange device, resulting in increased volume and weight of the robot. As a result, the cost of the robot increases, and the likelihood of malfunctions (e.g., leakage of pneumatic or hydraulic fluid) rises. Functionally, there was a problem in that the time required to exchange the process tool could not be reduced (e.g., significant time is needed to increase or decrease pneumatic or hydraulic pressure).

Accordingly, a new robot process tool exchange device has emerged that uses magnetic force to couple or separate the process tool from the process tool mounting portion. As a result, the robot process tool exchange device has become simpler and operates more quickly.

### DETAILED DESCRIPTION OF THE INVENTION

### Technical Problem

One objective of the present invention is to provide a robot process tool exchange device capable of maintaining a more stable and robust coupling state between the process tool and the process tool mounting portion.

### Means for Solving the Problem

To achieve the above objective, a robot process tool exchange device according to one aspect of the present invention includes: a first coupling module configured to be mounted on a robot; a second coupling module configured to be mounted on a process tool; one of the first coupling module and the second coupling module includes a switching magnetic unit configured to generate a magnetic path to magnetically couple the one to the other of the first coupling module and the second coupling module, or to release the magnetic path to separate the one from the other; and the other includes a clamping unit configured to undergo posture transformation by the magnetic force generated by the switching magnetic unit creating the magnetic path, thereby clamping the one.

Here, the one may further include a locking jaw, and the clamping unit may include a locking protrusion configured to engage with the locking jaw in accordance with the posture transformation.

Here, the one may further include a locking groove into which the locking protrusion is inserted, and the locking jaw may be the bottom of the locking groove.

Here, the clamping unit may further include a pressing ball mounted to protrude from the locking protrusion, and the pressing ball may be configured to press against a wall surface of the locking groove in accordance with the posture transformation.

Here, the clamping unit may further include: a driven link having the locking protrusion; and a driving link, a portion of which is rotatably connected to the driven link to rotationally drive the driven link.

Here, the clamping unit may further include: a fixed shaft coupled to the driven link; and a base on which the fixed shaft is rotatably installed and which is fixed in position relative to the driven link.

Here, the other may further include a contact plate disposed to face the one, and the base may be fixedly installed on the contact plate.

Here, the clamping unit may further include an operating panel on which another portion of the driving link is rotatably installed, and the operating panel may be configured to move toward the one and magnetically couple with the one as the magnetic path is generated.

Here, the other may further include: a contact plate disposed to face the one; and a mounting plate coupled to the contact plate and disposed to face the process tool, and the operating panel may be movably disposed between the contact plate and the mounting plate.

Here, the contact plate may include a receiving space capable of accommodating the operating panel.

A robot process tool exchange device according to another aspect of the present invention includes: a first coupling module configured to be mounted on a robot; a second coupling module configured to be mounted on a process tool; the first coupling module includes a switching magnetic unit configured to generate a magnetic path to magnetically couple the first coupling module to the second coupling module, or to release the magnetic path to separate the first coupling module from the second coupling module; and the second coupling module includes a clamping unit configured to undergo posture transformation as the first coupling module is seated on the second coupling module, thereby clamping the first coupling module.

Here, the first coupling module may further include a locking jaw, and the clamping unit may include a locking protrusion configured to engage with the locking jaw in accordance with the posture transformation.

Here, the clamping unit may include: a driven link having the locking protrusion; a fixed shaft coupled to the driven link; a base on which the fixed shaft is rotatably installed and which is fixed in position relative to the driven link; and a driving link, a portion of which is rotatably connected to the driven link to rotationally drive the driven link so that the locking protrusion rotates about the fixed shaft.

Here, the clamping unit may further include an operating panel on which another portion of the driving link is rotatably installed, and the operating panel may be configured to move toward the first coupling module and magnetically couple with the one as the magnetic path is generated.

Here, the second coupling module may further include: a contact plate disposed to face the first coupling module; and a mounting plate coupled to the contact plate and disposed to face the process tool, and the operating panel may be movably disposed between the contact plate and the mounting plate.

### Effects of the Invention

According to the robot process tool exchange device configured as described above, when one of the first coupling module and the second coupling module has a switching magnetic unit that generates a magnetic path for magnetic coupling between them, the other undergoes posture transformation due to the magnetic force generated by the magnetic path and has a clamping unit that clamps the one, thereby adding clamping to the magnetic coupling between them.

As a result, the coupling between the first coupling module and the second coupling module can be made more robust. This ensures that the process tool remains stably coupled to the robot even when forces applied to the robot process tool exchange device suddenly increase due to unintended movements or postures of the robot.

### BRIEF DESCRIPTION OF THE DRAWINGS

FIG. 1 is a perspective view showing a general articulated robot.
FIG. 2 is a perspective view showing the configuration of a robot process tool exchange device according to an embodiment of the present invention.
FIG. 3 is a block diagram showing the detailed configuration of the robot process tool exchange device of FIG. 2.
FIG. 4 is a perspective view showing the coupling of a robot process tool exchange device according to another embodiment of the present invention.
FIG. 5 is an exploded perspective view of the robot process tool exchange device of FIG. 4.
FIG. 6 is an exploded perspective view of the second coupling module of FIG. 5.
FIG. 7 is a partial cross-sectional view showing the main parts of FIG. 5.
FIG. 8 is a partial cross-sectional view showing the main parts of FIG. 4.
FIG. 9 is a partial cross-sectional view showing a variant of FIG. 8.

### Embodiments for Carrying Out the Invention

Hereinafter, a robot process tool exchange device according to a preferred embodiment of the present invention will be described in detail with reference to the accompanying drawings. In this specification, identical or similar reference numerals are assigned to identical or similar components across different embodiments, and their descriptions are substituted with the initial description.

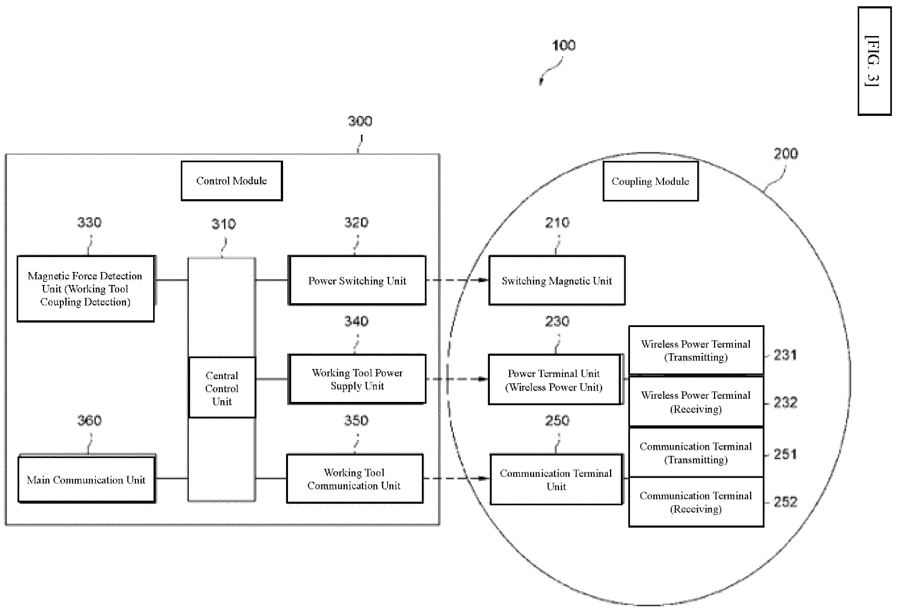

FIG. 2 is a perspective view showing the configuration of a robot process tool exchange device according to an embodiment of the present invention, and FIG. 3 is a block diagram showing the detailed configuration of the robot process tool exchange device of FIG. 2.

Referring to these drawings, the process tool coupling device (100) may include a coupling module (200) and a control module (300).

The coupling module (200) may have male and female (first and second) coupling modules (see FIG. 2). The male and female coupling modules are physically mounted on the process tool (working tool) or the robot (specifically, the robot arm), respectively.

One of the coupling modules (200) is provided with a switching magnetic unit (210). By the operation of the switching magnetic unit (210), a magnetic path is generated or released. When the magnetic path is generated, the male and female coupling modules are magnetically coupled to each other. When the magnetic path is released, the male and female coupling modules can be separated from each other.

The male and female coupling modules may be provided with a power terminal unit (or wireless power unit) (230) for transmitting power to the process tool. Each terminal of the power terminal unit (230) may be provided as a female power terminal (232) (or power receiving terminal) and a male power terminal (231) (or power transmitting terminal) on the male and female coupling modules, respectively.

The male and female coupling modules may also be provided with a communication terminal unit (250) for data communication with the process tool. Each terminal of the communication terminal unit (250) may be provided as a female communication terminal (252) (or communication receiving terminal) and a male communication terminal (251) (or communication transmitting terminal) on the male and female coupling modules, respectively.

The control module (300) performs control related to the process tool through the coupling module (200). For example, the control module (300) applies or cuts off power supplied to the process tool through the power terminal unit (or wireless power unit) (230) of the coupling module (200). The control module (300) controls the process tool or receives information (data) sensed through the process tool via the communication terminal unit (250). The control module (300) also applies or cuts off magnetic force to couple or separate the process tool through the switching magnetic unit (210).

Referring to FIG. 3, the control module (300) includes a central control unit (310), a power switching unit (320), a magnetic force detection unit (330), a process tool power supply unit (340), a process tool communication unit (350), and a main communication unit (360).

The central control unit (310) automatically generates an adsorption command (i.e., an adsorption command for the process tool) according to a command from a higher-level server (or higher-level control unit) or a designated schedule. The central control unit (310) also outputs an adsorption trigger signal corresponding to the adsorption command for a specified time and then terminates the output of the adsorption trigger signal.

The power switching unit (320) outputs a direct current (DC) voltage corresponding to the adsorption trigger signal to the switching magnetic unit (210). Accordingly, the switching magnetic unit (210) generates a magnetic path. The magnetic path causes the male and female coupling modules to be magnetically coupled. This also causes the process tool and the robot arm attached to the male and female coupling modules, respectively, to be coupled to each other.

The magnetic force detection unit (330) detects the magnetic force of the switching magnetic unit (210). The magnetic force detection unit (330) may include, for example, a Hall sensor. The central control unit (310) determines the generation and release of the magnetic path using the magnetic force detected by the magnetic force detection unit (330) and can maintain the output of the trigger signal until the desired magnetic path is formed or released. This allows the magnetic path to be stably generated or released.

The process tool power supply unit (340), under the control of the central control unit (310), applies or cuts off driving power to the process tool through the male and female coupling modules.

Similarly, the process tool communication unit (350) controls the process tool or receives information sensed through the process tool via the communication terminal unit (250) of the male and female coupling modules.

When communication with the process tool is detected through the process tool communication unit (350), the central control unit (310) may determine that the process tool is in contact with the robot arm in a coupleable manner. In this state, where the process tool is in contact with the robot arm in a coupleable manner, applying power to the switching magnetic unit (210) to generate magnetic force causes the process tool and the robot arm to be coupled.

The main communication unit (360) communicates with a higher-level server to receive commands (e.g., process tool coupling or separation commands) or schedule (or process tool coupling or separation profile) information from the higher-level server. The main communication unit (360) may also transmit information on the coupled state or separated state of the process tool through the coupling module (200) to the higher-level server (or higher-level control unit) (not shown).

For a more specific configuration of the robot process tool exchange device (100) described above, the specific configuration of the switching magnetic unit (210), etc., reference may be made to Korean Patent No. 2133157 (registered on July 7, 2020) by the present applicant. The contents of this registered patent are incorporated herein in their entirety.

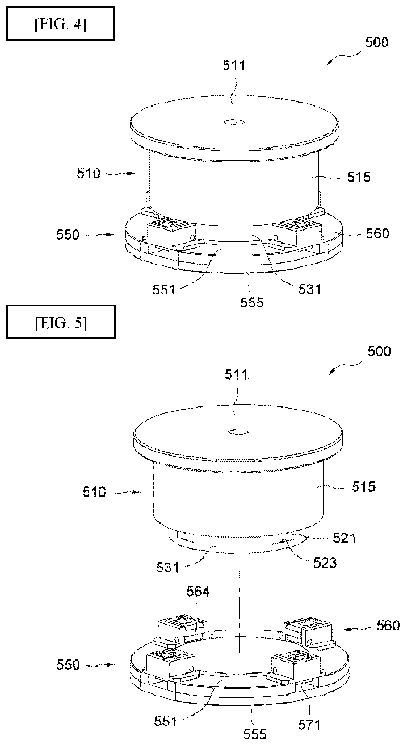

Another form of the robot process tool exchange device (500) will be described with reference to FIGS. 4 to 9. Portions of the robot process tool exchange device (500) corresponding to the robot process tool exchange device (100) of the previous embodiment may be omitted or briefly described.

FIG. 4 is a perspective view showing the coupling of a robot process tool exchange device according to another embodiment of the present invention, and FIG. 5 is an exploded perspective view of the robot process tool exchange device of FIG. 4.

Referring to these drawings, the robot process tool exchange device (500) may include a first coupling module (510) and a second coupling module (550). If the first coupling module (510) is mounted on the robot, the second coupling module (550) is mounted on the process tool.

Specifically, the first coupling module (510) may include a mounting plate (511), a housing (515), a locking groove (521), and a switching magnetic unit (531).

The mounting plate (511) is configured to be mounted on a robot, for example, a robot arm.

The mounting plate (511) may be fastened to the robot arm with fastening elements, such as bolts.

The housing (515) is coupled to one surface of the mounting plate (511). The housing (515) may generally have a cylindrical shape. The switching magnetic unit (531) is disposed in the hollow portion of the housing (515).

The locking groove (521) is a recessed portion formed on the outer surface of the switching magnetic unit (531). A plurality of locking grooves (521) may be provided along the circumference of the housing (515). In this embodiment, four locking grooves (521) are provided at 90° intervals as an example. The bottom of the locking groove (521) may be a locking jaw (523).

The switching magnetic unit (531) is the same as the switching magnetic unit (210, see FIG. 3) described in the previous embodiment. It is configured to generate a magnetic path to magnetically couple the first coupling module (510) to the second coupling module (550), or to release the magnetic path to separate the first coupling module (510) from the second coupling module (550).

Specifically, the second coupling module (550) may include a contact plate (551), a mounting plate (555), and a clamping unit (560).

The contact plate (551) is the portion that contacts the first coupling module (510) during magnetic coupling. To this end, the contact plate (551) is disposed to face the first coupling module (510). The contact plate (551) may also have a larger area than the housing (515) of the first coupling module (510).

The mounting plate (555) is located below the contact plate (551) and is coupled to the contact plate (551). The mounting plate (555) is configured to have the process tool mounted thereon and is disposed to face the process tool.

The clamping unit (560) is configured to clamp the first coupling module (510) as it undergoes posture transformation. The posture transformation may include the clamping unit (560) changing from an original posture to another posture or returning to the original posture after changing to another posture. The posture transformation may be achieved by the clamping unit (560) responding to the magnetic force generated by the switching magnetic unit (531) creating the magnetic path. Alternatively, the posture transformation may be achieved by gravity or pressure as the first coupling module (510) is seated (contacts) the second coupling module (550).

The clamping unit (560) may be disposed to correspond to the locking groove (521). In this embodiment, corresponding to the four locking grooves (521), all or part of the clamping unit (560) is also provided in four. The clamping unit (560) may include a locking protrusion (564) inserted into the locking groove (521). The locking protrusion (564) may engage with the locking jaw (523) in accordance with the posture transformation.

According to this configuration, the first coupling module (510) and the second coupling module (550) are magnetically coupled by the switching magnetic unit (531). This coupling meets the coupling force required for the robot process tool exchange device (500).

In this situation, as the locking protrusion (564) engages with the locking jaw (523), the coupling force between the first coupling module (510) and the second coupling module (550) is further increased. This additional coupling force ensures that the first coupling module (510) and the second coupling module (550) maintain a robust coupling even when unexpected forces are applied due to the operating environment or characteristics of the robot process tool exchange device (500).

By the clamping unit (560), the second coupling module (550) is made difficult to separate from the first coupling module (510) in the height direction and also difficult to rotate about the height direction.

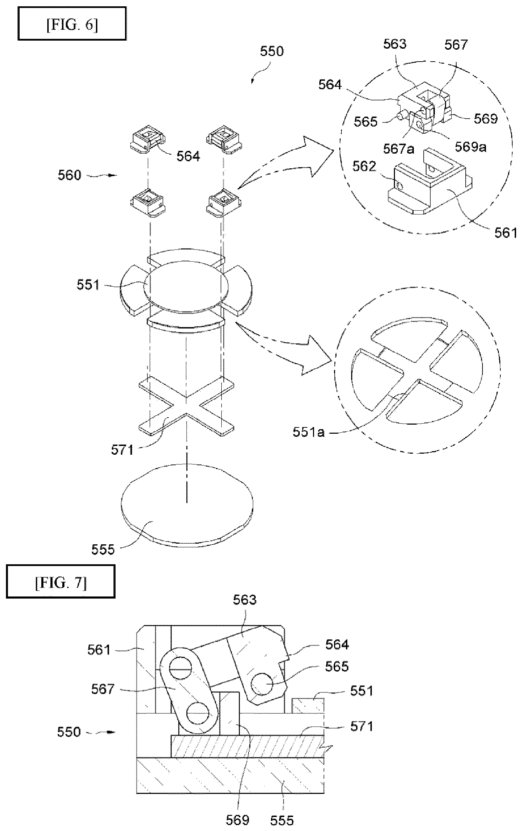

The specific configuration of the clamping unit (560) {and further, the second coupling module (550)} will be described with reference to FIG. 6. FIG. 6 is an exploded perspective view of the second coupling module of FIG. 5.

Referring to this drawing, the clamping unit (560) may include a base (561), a driven link (563), a driving link (567), and an operating panel (571).

The base (561) may be installed on the contact plate (551). The base (561) may have a form that surrounds the driven link (563) and the like. A pair of insertion holes (562) may be formed in a portion of the base (561). Since the base (561) is fixed to the contact plate (551), it is fixed in position relative to the driven link (563), the driving link (567), and the like.

The driven link (563) is a component having the locking protrusion (564). The locking protrusion (564) may be a portion protruding from one end of the body of the driven link (563). Another portion of the driven link (563) may be provided with a fixed shaft (565).

Both ends of the fixed shaft (565) may protrude to both sides of the body of the driven link (563) and be rotatably coupled to the insertion holes (562). When the driven link (563) is rotated, the locking protrusion (564) rotates about the fixed shaft (565).

The driving link (567) is for rotationally driving the driven link (563). To this end, the driving link (567) and the driven link (563) may be rotatably connected by a connecting pin (567a). The driving link (567) is also rotatably connected to the operating panel (571) through a frame (569). To this end, the frame (569) is fixed to the operating panel (571), and the driving link (567) and the frame (569) may be rotatably connected by a connecting pin (569a). Alternatively, it is also possible for the driving link (567) to be directly rotatably connected to the operating panel (571).

The operating panel (571) is a component installed on the frame (569). The operating panel (571) may have a cross shape corresponding to the four locking protrusions (564). The operating panel (571) is illustrated as a single cross-shaped member but may also be formed as four separate members. The operating panel (571) may move toward the first coupling module (510, FIG. 5) and magnetically couple with it as the magnetic path is generated. The operating panel (571) moves between the contact plate (551) and the mounting plate (555). To facilitate the movement of the operating panel (571), the contact plate (551) may have a receiving space (551a) capable of accommodating the operating panel (571). In this embodiment, the receiving space (551a) has a cross shape corresponding to the operating panel (571).

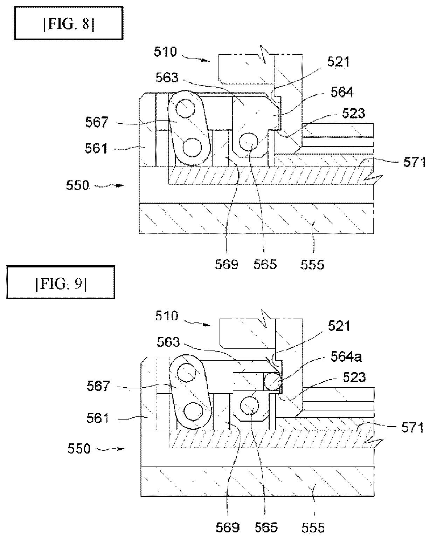

Now, the clamping action of the clamping unit (560) will be described with reference to FIGS. 7 and 8. FIG. 7 is a partial cross-sectional view showing the main parts of FIG. 5, and FIG. 8 is a partial cross-sectional view showing the main parts of FIG. 4.

Referring to FIG. 7, before the magnetic path is generated, the operating panel (571) is supported by the mounting plate (555). Accordingly, the lower part of the driving link (567) is positioned at a height lower than the contact plate (551). This causes the locking protrusion (564) of the driven link (563) to be rotated counterclockwise about the fixed shaft (565).

Referring to FIG. 8, as the first coupling module (510) contacts the second coupling module (550) and a magnetic path is generated by the switching magnetic unit (531), the operating panel (571) moves upward due to magnetic force.

The raised operating panel (571) is inserted into the receiving space (551a, FIG. 6) and comes into contact with the contact plate (551). The operating panel (571) is also magnetically coupled with the contact plate (551). To this end, it is preferable that the contact plate (551) and the operating panel (571) are formed of a ferromagnetic material.

The upward movement of the operating panel (571) also raises the driving link (567). Due to the upward movement of the driving link (567), the driven link (563) is rotationally driven clockwise. Since the fixed shaft (565) of the driven link (563) is fixed in position by the base (561), the locking protrusion (564) rotates clockwise.

The locking protrusion (564) rotates and is inserted into the locking groove (521). In this case, the lower part of the locking protrusion (564) engages with the locking jaw (523). As a result, the first coupling module (510) is clamped by the second coupling module (550), allowing it to be more robustly coupled to the second coupling module (550).

When the magnetic path is released by the switching magnetic unit (531), the operating panel (571) descends due to gravity. The operating panel (571) returns to a state supported by the mounting plate (555). Accordingly, the driving link (567) descends, pulling the driven link (563). As a result, the driven link (563) rotates counterclockwise, and the locking protrusion (564) is released from engagement with the locking jaw (523).

FIG. 9 is a partial cross-sectional view showing a variant of FIG. 8.

Referring to this drawing, the driven link (563) may further include a pressing ball (564a). The pressing ball (564a) may be mounted on the driven link (563) to protrude from the side of the locking protrusion (564).

The pressing ball (564a) presses against the wall surface of the locking groove (521) in the posture-transformed state. As a result, the force with which the clamping unit (560) presses toward the center of the first coupling module (510) can be concentrated at a localized area {the area where the pressing ball (564a) contacts}.

The robot process tool exchange device as described above is not limited to the configuration and operation methods of the embodiments described above. The embodiments may be configured so that various modifications can be made by selectively combining all or part of each embodiment.

### Industrial Applicability

The present invention has industrial applicability in the field of manufacturing robot process tool exchange devices.

## Claims

1. A first coupling module configured to be mounted on a robot;
A second coupling module configured to be mounted on a process tool;
wherein one of the first coupling module and the second coupling module includes a switching magnetic unit configured to generate a magnetic path to magnetically couple the one to the other of the first coupling module and the second coupling module, or to release the magnetic path to separate the one from the other; and
the other includes a clamping unit configured to undergo posture transformation by the magnetic force generated by the switching magnetic unit creating the magnetic path, thereby clamping the one.

2. The robot process tool exchange device of claim 1, wherein the one further includes a locking jaw, and the clamping unit includes a locking protrusion configured to engage with the locking jaw in accordance with the posture transformation.

3. The robot process tool exchange device of claim 2, wherein the one further includes a locking groove into which the locking protrusion is inserted, and the locking jaw is the bottom of the locking groove.

4. The robot process tool exchange device of claim 3, wherein the clamping unit further includes a pressing ball mounted to protrude from the locking protrusion, and the pressing ball is configured to press against a wall surface of the locking groove in accordance with the posture transformation.

5. The robot process tool exchange device of claim 2, wherein the clamping unit further includes: a driven link having the locking protrusion; and a driving link, a portion of which is rotatably connected to the driven link to rotationally drive the driven link.

6. The robot process tool exchange device of claim 5, wherein the clamping unit further includes: a fixed shaft coupled to the driven link; and a base on which the fixed shaft is rotatably installed and which is fixed in position relative to the driven link.

7. The robot process tool exchange device of claim 6, wherein the other further includes a contact plate disposed to face the one, and the base is fixedly installed on the contact plate.

8. The robot process tool exchange device of claim 5, wherein the clamping unit further includes an operating panel on which another portion of the driving link is rotatably installed, and the operating panel is configured to move toward the one and magnetically couple with the one as the magnetic path is generated.

9. The robot process tool exchange device of claim 8,
wherein the other further includes:
a contact plate disposed to face the one; and
a mounting plate coupled to the contact plate and disposed to face the process tool, and the operating panel is movably disposed between the contact plate and the mounting plate.

10. The robot process tool exchange device of claim 9, wherein the contact plate includes a receiving space capable of accommodating the operating panel.

11. A first coupling module configured to be mounted on a robot;
A second coupling module configured to be mounted on a process tool;
wherein the first coupling module includes a switching magnetic unit configured to generate a magnetic path to magnetically couple the first coupling module to the second coupling module, or to release the magnetic path to separate the first coupling module from the second coupling module; and
the second coupling module includes a clamping unit configured to undergo posture transformation as the first coupling module is seated on the second coupling module, thereby clamping the first coupling module.

12. The robot process tool exchange device of claim 11, wherein the first coupling module further includes a locking jaw, and the clamping unit includes a locking protrusion configured to engage with the locking jaw in accordance with the posture transformation.

13. The robot process tool exchange device of claim 12,
wherein the clamping unit includes:
a driven link having the locking protrusion;
a fixed shaft coupled to the driven link;
a base on which the fixed shaft is rotatably installed and which is fixed in position relative to the driven link; and
a driving link, a portion of which is rotatably connected to the driven link to rotationally drive the driven link so that the locking protrusion rotates about the fixed shaft.

14. The robot process tool exchange device of claim 13, wherein the clamping unit further includes an operating panel on which another portion of the driving link is rotatably installed, and the operating panel is configured to move toward the first coupling module and magnetically couple with the one as the magnetic path is generated.

15. The robot process tool exchange device of claim 14,
wherein the second coupling module further includes:
a contact plate disposed to face the first coupling module; and
a mounting plate coupled to the contact plate and disposed to face the process tool, and the operating panel is movably disposed between the contact plate and the mounting plate.
